Europäisches Patentamt

European Patent Office

Office européen des brevets

(11) Publication number: **0 122 728**
**B1**

(12) EUROPEAN PATENT SPECIFICATION

(45) Date of publication of patent specification: 28.12.88

(21) Application number: **84301819.3**

(22) Date of filing: **16.03.84**

(51) Int. Cl.⁴: **H 01 H 31/32, H 02 B 13/06**

(54) Gas-insulated switching apparatus.

(30) Priority: **17.03.83 JP 43120/83**

(43) Date of publication of application:
**24.10.84 Bulletin 84/43**

(45) Publication of the grant of the patent:
**28.12.88 Bulletin 88/52**

(84) Designated Contracting States:
**CH DE FR LI**

(56) References cited:
**EP-A-0 058 402**
**FR-A-2 458 160**
**FR-A-2 476 381**
**FR-A-2 494 491**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Yanabu, Satoru c/o Patent Division**
**Tokyo Shibaura Denki K.K. 72, Horikawa-cho**
**Saiwai-ku Kawasaki-shi Kanagawa-ken (JP)**
Inventor: **Nishiwaki, Susumu c/o Patent**
**Division**
**Tokyo Shibaura Denki K.K. 72, Horikawa-cho**
**Saiwai-ku Kawasaki-shi Kanagawa-ken (JP)**
Inventor: **Haginomori, Eiichi c/o Patent Division**
**Tokyo Shibaura Denki K.K. 72, Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

This invention relates to gas-insulated switching apparatus having interrupters, disconnecting switches, buses and the like, and associated interconnections incorporated within grounded containers in which insulating gas is sealed.

For the purpose of limiting the site area required for substations or switching stations and for ease of designing salt-resistant structures for use in coastal districts, a large number of installations have hitherto been utilised, which incorporate a series of components, such as interrupters, disconnecting switches and buses located within grounded metal containers filled with insulating gas, such as sulphur hexafluoride ($SF_6$) gas.

Disconnecting switches used in such apparatus in substations are operated in order to disconnect in-house devices from the power system, or to perform changeover of in-house circuits. Switching of the disconnecting switches is carried out while the adjacent interrupters are open. The disconnecting switches switch small charging currents on short-distance lines which are connected to adjacently positioned interrupters in a substation.

When a disconnecting switch interrupts a charging current, a large number of restrikes occur, and these restrikes can cause flash-over between the disconnecting switch and ground, as explained in IEEE Transactions on Power Apparatus and Systems, Vol. PAS-101, No. 10, pp. 3593—3602 and Vol. PAS—100, No. 6, pp 2726—2732.

It is known from US—A—4291363 for switching apparatus to comprise a first gas-insulated bus and a second gas-insulated bus; a bank bay in which a pair of disconnecting switches are connected to respective buses and to one side of an interrupter and the other side of the interrupter is connected to a further disconnecting switch; a feeder bay in which a pair of disconnecting switches are connected to respective buses and to one side of an interrupter and the other side of the interrupter is connected to a further disconnecting switch; a bus coupler bay in which a pair of disconnecting switches are connected to respective buses and to opposite sides of an interrupter; each disconnecting switch having a grounded metal container containing an insulating gas, a fixed electrode assembly comprising a fixed electrode and a shield, and a movable electrode assembly comprising a shield and an electrode movable into contact with the fixed electrode when closed and positioned within its shield when open.

Many disconnecting switches employed in a substation have identical ratings when they are applied in identical system voltages, however, only some disconnecting switches cause grounding faults. These specific disconnecting switches may not readily be distinguished from healthy disconnecting switches which do not cause grounding faults because no difference can be seen between them when they are compared in an individual voltage withstanding test procedure. Further, it has been observed that disconnecting switches which are installed only at certain parts of a gas-insulated switching apparatus tend to cause ground flash-over. The reasons for these differences have not been recognised despite various experiments and studies.

It is a object of this invention to provide a gas-insulated switching apparatus capable of at least reducing the occurrence of grounding faults from the electrodes of disconnecting switches accommodated in the apparatus.

In apparatus of the type set forth, all the disconnecting switches have their movable electrode connected to the respective interrupter.

In order that the invention may be more readily understood, it will now be described, by way of example only, with reference to the accompanying drawings, in which:—

Figure 1 is a schematic diagram illustrating an example of a switching apparatus in a substation;

Figure 2 is a diagram which explains the occurrence of restriking surge voltages;

Figure 3 is a diagram illustrating arc restrikes occurring between electrodes of a $SF_6$ gas-insulated disconnecting switch;

Figure 4 is a schematic diagram illustrating an embodiment of a gas-insulated switching apparatus according to the present invention;

Figure 5 is a diagram illustrating the content of Table 1;

Figure 6 is a cross-sectional view of part of a $SF_6$ gas-insulated disconnecting switch in accordance with one embodiment of the invention; and

Figure 7 is a cross-sectional view of part of a $SF_6$ gas disconnecting switch in accordance with another embodiment of the invention.

Prior to describing the present invention, the phenomena associated with the use of disconnecting switches to interrupt charging currents will be described.

These phenomena can be considered as follows, as explained in IEEE Transactions on Power Apparatus and Systems, Vol. PAS-102, No. 1, pp 219—227.

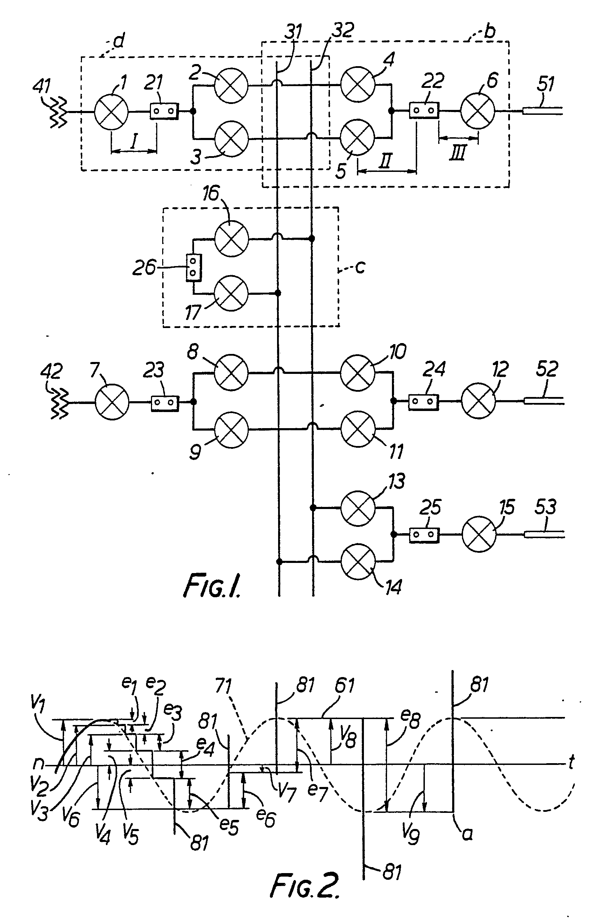

The $SF_6$ gas-insulated switching apparatus, as shown in Figure 1, includes disconnecting switches, interrupters and buses, respective charging portions of which, or partial portions thereof, are incorporated within a grounded metal container in which $SF_6$ gas is sealed.

Figure 1 shows an example of gas-insulated switching apparatus in a substation. Reference numerals 1—17 represent disconnecting switches, 21—26 interrupters, 31 and 32 buses, 41 and 42 transformers, and 51—53 transmission lines, respectively. The disconnecting switch 1 switches, for example, a short-distance line I connected to the interrupter 21, the disconnecting switch 4 switches a line II when the switch 5 and the interrupter 22 has been opened, and the disconnecting switch 6 switches a short-distance line III connected to the interrupter 22. Here, a portion $a$ encircled by a broken line is usually called a bank bay, a portion $b$ a feeder bay, and a portion $c$ a bus coupler bay, respectively.

When a $SF_6$ gas-insulated disconnecting switch, accommodated in such apparatus in a substation, switches a charging current, a stepwise voltage waveform with respect to the ground as illustrated in Figure 2 will be observed. In Figure 2, reference numerals 61 and 71 represent respective voltages against the ground on the load side terminal and on the power source side terminal of the disconnecting switch, respectively. The waveform shown in Figure 2 may be explained as follows: a small charging current is interrupted at the time when the electrodes are opened, at which time an instantaneous power source voltage $V_1$ that appeared at interruption still remains on the load side line. Since the power source voltage which is an alternating voltage varies in magnitude and in polarity with respect to time, the difference between the residual voltage on the line and the power source voltage is applied across the electrodes of the disconnecting switch. At this instant, the disconnecting switching is still in the process of opening, and the insulation recovery across the electrodes is not sufficient, so that a restrike occurs at the voltage $e_1$ across the electrodes. This causes the flowing transient current to be attenuated, then interruption is immediately established, in turn, the residual voltage on the load side line remains so as to coincide in magnitude with a power source voltage $V_2$ at that instant. The power source voltage further varies, thus a restrike occurs again at the voltage $e_2$ across the electrodes. Hereinafter, in the same fashion as above, restrikes repeatedly occur at the respective voltages $e_3$, $e_4$, $e_5$, $e_6$, $e_7$, $e_8$, ..., across the electrodes. The inter-electrode distance of the disconnecting switch increases gradually with respect to time, so that the magnitude relationship of such voltages across the electrodes shows in general as follows: $e_8 > e_7 \ldots > e_2 > e_1$. When the insulation voltage across the electrodes $e$ of the disconnecting switch recovers and reaches a magnitude at least twice the crest value $V_1$ of the power source voltage ($e > 2V_1$), restriking no longer occurs and interruption is completed.

Upon occurrence of the restrikes, respective surge voltages 81 occur as illustrated in Figure 2. The transient oscillations of the surge voltages 81 have higher frequencies due to the short-distance lines of the load side to be switched, and the frequencies reach as high as several hundred kHz up to several MHz. The surge voltages 81 occur such that the line voltages oscillate with the power source voltage as centre.

When the disconnecting switch interrupts a small charging current, a large number of restrikes occur, however, the residual voltages on the load side reach at maximum the crest value of the power source voltage. When consideration is given to the maximum restrike surge voltage, it is sufficient to discuss the case where a restrike occurs at the instant at which a power source side voltage reaches its crest value and also the load side voltage becomes the crest value of the power source voltage with reversed polarity. In this case, the polarity of surge voltage coincides with the polarity of power source voltage.

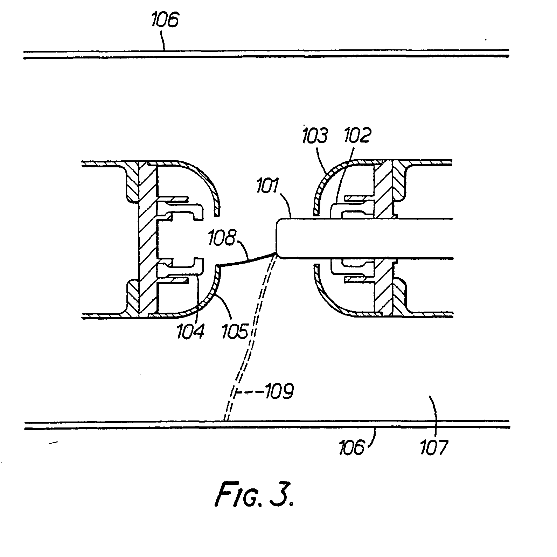

Figure 3 shows the electrodes of a $SF_6$ gas-insulated disconnecting switch and arc behaviour upon occurrence of the restrikes described above. In Figure 3, reference numeral 101 represents a movable electrode, 102 a contact on the movable side, and 103 a shield on the movable side, respectively. On the other hand, reference numeral 104 represents the electrode of the fixed side, 105 a shield on the fixed side, 106 a ground potential metal container, 107 $SF_6$ (sulphur hexafluoride) gas, and 108 a restriking arc, respectively. The movable electrode 101, when in the closed position, is in contact with the fixed side contact 104, however, when it is opened, it is driven to the right and is eventually accommodated within the movable side shield 103. In the process of driving the movable electrode 101, the above-described restrikes occur a large number of times, and during this process the restriking arc 108 is formed.

It has been recognised that, when the arc 108 is formed between the electrodes by restrikes and the surge voltages 81 shown in Figure 2 occur between the movable electrode 101 and the ground potential metal container 106, the surge voltages 81 possibly cause a ground fault from the electrode 101. Here, reference numeral 109 represents such a ground flash-over arc. It is also recognised that the magnitude of surge voltage sufficient to cause a ground flash-over is considerably lower than the ground withstand voltage when the arc 108 in Figure 3 does not appear, or than the to ground withstand voltage with a wire conductor simulating the arc 108. Therefore, the ground flashover voltage cannot be determined only by the electrostatic field thereabout, and is largely dependent of occurrence of the arc 108.

On the other hand, in "withstand voltage" comparison tests, such a phenomenon is well-known that either when a rod-shaped electrode and a flat-plate-shaped electrode are oppositely arranged, or when a rod-shaped electrode has positive potential, namely when an electrode of the side to be a cause of inequality in electrostatic field has a positive potential, the withstand voltage becomes lower than when the rod-shaped electrode has a negative potential.

Thus, it is considered that the withstand voltage of the disconnecting switch in a gas-insulated switching apparatus can have a relationship with the magnitude of the above-described surge voltage that varies depending on the presence of restrike arcs. This result significantly affects the ground flash-over voltage, and also the phenomenon in the withstand voltage comparison test. Thus, the structure of a $SF_6$ gas-insulated switching apparatus is such that the terminals of the movable electrode sides of all the disconnecting switches utilised in the $SF_6$ gas-insulated substation as shown in Figure 1 are all connected to the respective load sides.

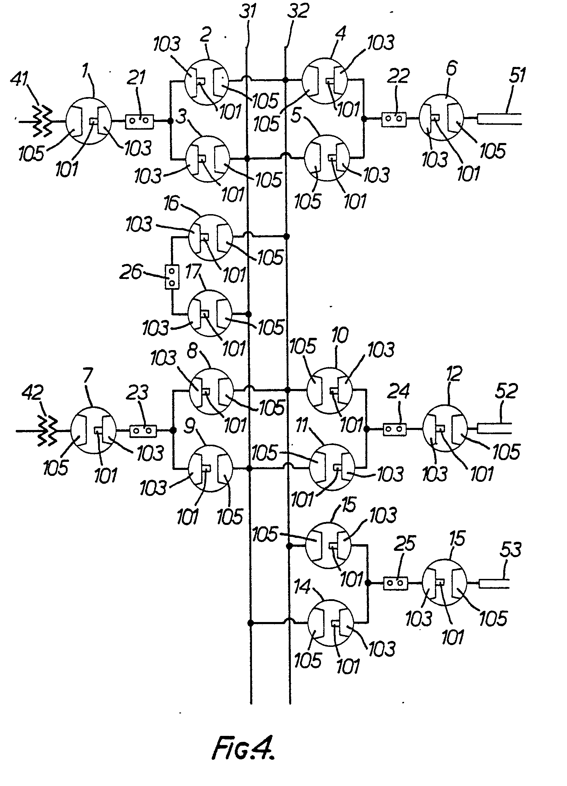

Figure 4 shows one embodiment of a gas-insulated switching apparatus taking the aforementioned into consideration so as to constitute a gas-insulated substation according to the present invention. Figure 4 is a revised illustration of the disconnecting switches based on the schematic diagram of Figure 1 in order that the arrangement of both movable and fixed contacts to be better appreciated. In Figure 4, reference numerals 1—17 represent $SF_6$ gas-insulated disconnecting switches, 21—26 $SF_6$ gas-insulated interrupters, 31 and 32 $SF_6$ gas-insulated buses, and 41 and 42 transformers, respectively. Reference numerals 101, 103 and 105, respectively, represent movable electrodes, side shields on the movable electrodes, and shields on the fixed electrodes, all of which are in $SF_6$ gas-insulated disconnecting switches. The respective movable electrode terminals including the shields 103 of all the $SF_6$ gas-insulated disconnecting switches 1—17 are connected to the respective corresponding load sides to be interrupted, i.e. to the $SF_6$ gas-insulated interrupters to be disconnected from the power source by means of the respective $SF_6$ gas-insulated disconnecting switches.

Now the load sides interruption will be explained. First, consider the disconnecting switch 1. When the switch 1 is to be opened, the interrupter 21 is opened first and then the disconnecting switch 1 is opened. In an open circuit status, the movable electrode 101 of the disconnecting switch 1 is not energised because the interrupter 21 has been opened, while the fixed electrode of the disconnecting switch 1 is still energised because it is connected to the transformer 41. In this specification, the sides which are not energised when disconnected by disconnecting switches are referred to as load sides.

On the other hand, when the disconnecting switches 2 and 3 are considered, first the interrupter 21 is opened and then the disconnecting switch 2 or 3 is opened, in this state, the fixed electrode of the disconnecting switch 2 or 3 is still energised because it is connected to the bus 32 or 31. Thus, in the disconnecting switches 2 and 3, the sides connected to the interrupter 21 will be the load sides. In the same manner as above, the load sides of the disconnecting switches 4—17 may be determined.

Next, in the above-described $SF_6$ gas-insulated switching apparatus, when the $SF_6$ gas-insulated disconnecting switch interrupts a charging current, as described above, a voltage remains on the load side. Should the restrike occur when the power source voltage is reversed in polarity to that of this residual voltage, then a greater surge voltage occurs. The polarity of the surge voltage, in this case, coincides with that of the power source voltage as shown in Figure 2.

Table 1 represents four separate cases which can occur with a disconnecting switch. This table, in column 1, represents a relationship between the connection of the movable electrode terminal of the $SF_6$ gas-insulated disconnecting switch as to whether they are connected to the load side, i.e. the terminal of the $SF_6$ gas-insulated interrupter to be disconnected from the power source by the $SF_6$ gas-insulated disconnecting switch, as shown in the cases 1 and 2 illustrated as A, or whether the movable electrode terminals are connected to the power source side, i.e. the bus, as shown in cases 3 and 4 illustrated as B. Column 2 of the table designates, for each of the cases, the condition of the polarity of the residual voltage on the load side upon the occurrence of a restrike, whereas columns 3 and 4 illustrate the resulting polarities of voltages either at the movable or fixed electrode immediately before a restrike occurs. Column 5 illustrates the polarities of the surge voltage which is to occur due to the restrike.

TABLE 1

EP 0 122 728 B1

|  | 1 | 2 | 3 | 4 | 5 |
|---|---|---|---|---|---|
|  | Connection of movable electrode terminal | The polarity of the residual voltage on load side of the disconnecting switch | The polarity of the voltage on the movable electrode immediately before a restriking | The polarity of the voltage on the fixed electrode immediately before a restriking | The polarity of surge voltage caused by the restriking |
| Case 1 A | The load side, *i.e.,* the interrupter to be disconnected from the power source | Positive | Positive | Negative | Negative |
| Case 2 A | The load side, *i.e.,* the interrupter to be disconnected from the power source | Negative | Negative | Positive | Positive |
| Case 3 B | The power source, *i.e.,* the bus | Positive | Negative | Positive | Negative |
| Case 4 B | The power source, *i.e.,* the bus | Negative | Positive | Negative | Positive |

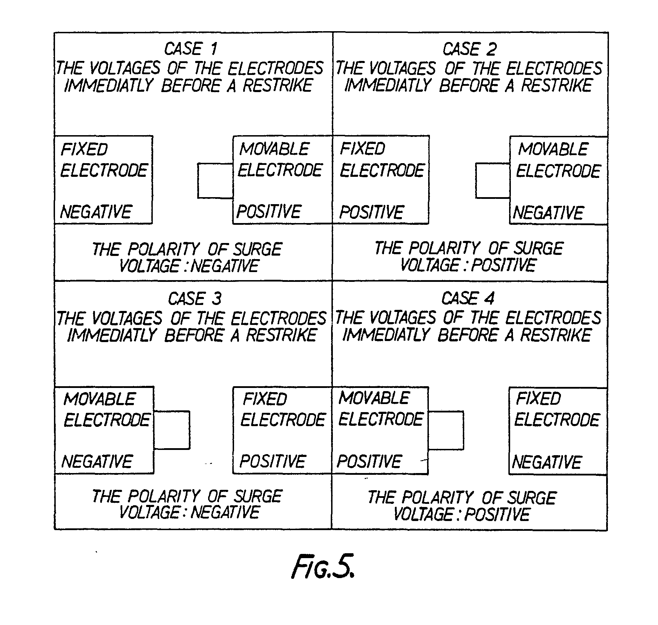

Figure 5 is an illustration of the electrode structure corresponding to Table 1.

In the four illustrated cases, the respective voltages to initiate a ground flash-over differ significantly one from another even when the electrode structure and the distance to the inner wall of the container with the ground potential are identical. The fact that the lowest ground flash-over appears in the case 4 has been confirmed by a large number of tests. This fact is considered to have a close relationship to a phenomenon, whereby when the rod side of a rod-versus-flat plate electrode has a positive potential, that is, when the electrode side which becomes a cause of inequality in electrostatic field has a positive potential, the withstand voltage of the rod-versus-flat plate electrode becomes lower than that of when the potential is reversed.

The case 4 where the lowest ground short-circuit voltage appears in the structure of switching apparatus shown in Figure 1 occurs only when the fixed electrodes of the disconnecting switches are connected to the load sides to be interrupted, that is, to the interrupter side to be disconnected from the power source. In the embodiment of the present invention shown in Figure 4, all of the movable electrodes of the $SF_6$ gas-insulated disconnecting switches are connected to the load side to be interrupted, that is, to the interrupter side to be disconnected from the power source, so that the above-described case 4, i.e. the condition in which the ground flash-over voltage becomes lowest, does not occur. Therefore, a substation which is less susceptible to ground flash-over failures may be provided according to the present invention.

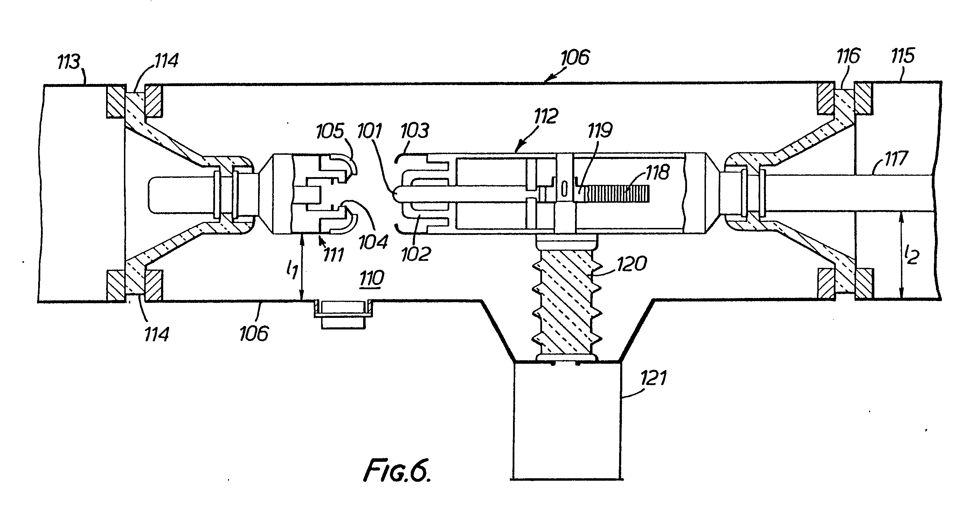

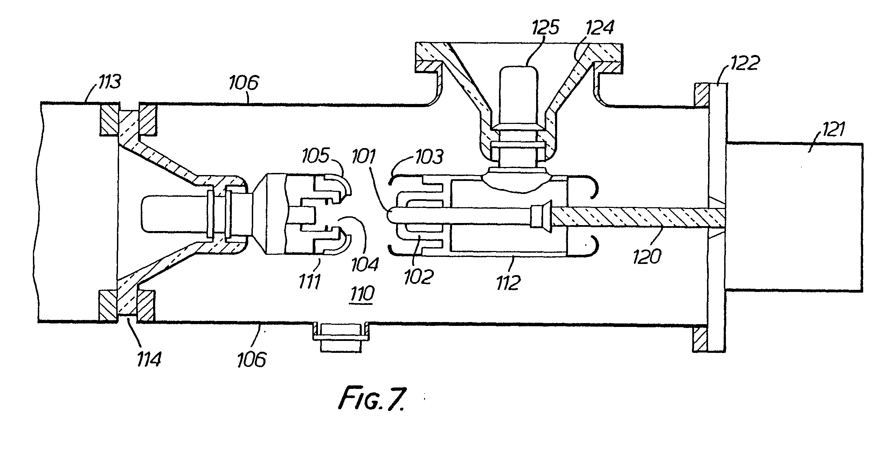

The disconnecting switch shown in Figure 6 has the terminals of both fixed and movable electrodes aligned in a straight line, while the disconnecting switch shown in Figure 7 has the fixed terminal of the fixed electrode arranged at right angles to the terminal of the movable electrode.

In Figures 6 and 7, a disconnecting unit 110 comprises a fixed electrode assembly 111 and a movable electrode block 112. The fixed electrode 111 is supported by an insulating spacer 114 sandwiched between metal containers 106 and 113. On the tip of the fixed side electrode 111 there are provided a plurality of fixed side contacts 104, and the tip is covered with an electrostatic field relaxation shield 105. The structure of the movable side electrode block 112 in Figure 6 differs from that in Figure 7, so that this will be first described. The movable electrode block 112 in Figure 6 is supported by an insulating spacer 116 sandwiched between metal containers 106 and 115, and is connected through a terminal 117 to an interrupter or to a bus. On the tip of the block 112 there are provided a plurality of contacts 102, and the tip is covered with an electrostatic field relaxation shield 103. A movable electrode 101 is arranged so that it can be shifted in the direction of its length. Within the electrode block 112 there is provided a rack 118 and a pinion 119 that meshes with the rack 118. The pinion 119 is arranged to be rotated by an operating mechanism 121 through an operating rod 120 in order to shift the electrode 101.

Next, the structure of the movable electrode 112 shown in Figure 7 will be described. On the tip of the block 112 there are provided a plurality of movable side contacts 102, and the tip is surrounded by an electrostatic field relaxation shield 103. The movable electrode 101 is attached so that it can be shifted in the direction of its length within the block 112 as shown in Figure 7. The movable electrode 101 is coupled to an operating mechanism 121 through an insulating operating rod 120. The electrode block 112 is electrically connected to a conductor 125 which is supported through the metal container 106 by way of an insulating spacer 124. The conductor 125 is led out in a direction perpendicular to the moving direction of the movable electrode 101. When the disconnecting switch shown in Figure 7 is utilised for such a switching apparatus as shown in Figure 1, the structure of the switching apparatus varies depending upon whether the movable electrode terminals of the disconnecting switches are connected to the load line sides, that is, to the interrupter sides to be disconnected from the power source. By contrast, when the disconnecting switch shown in Figure 6 is utilised in the switching apparatus shown in Figure 1, such variations of the structure thereof may be avoided. Namely, in the switching apparatus shown in Figure 1, it is more advantageous to utilise the disconnecting switch shown in Figure 6 when all the movable side electrode terminals of the disconnecting switches are designed to be connected to the load sides, that is, to the interrupters to be disconnected from the power source.

In a $SF_6$ gas-insulated switching apparatus, gas-insulated lines which are designed to connect disconnecting switches and interrupters should withstand certain specified test voltage determined by the system voltage. On the other hand, an insulation against grounding of $SF_6$ gas-insulated disconnecting switches while opening or closing has hitherto been determined higher than the insulation against grounding of the gas-insulated lines because while restriking, as described above, there exists a phenomenon that the withstand voltage against the ground will be lowered. However, when the movable side electrode terminals of $SF_6$ gas-insulated disconnecting switches are respectively connected to the load sides to be interrupted, that is, to the terminal sides of the $SF_6$ gas-insulated interrupters to be disconnected from the power source, there exists almost no problem in such deterioration of insulation against grounding that has conventionally occurred upon restrikes. Therefore, it was confirmed that, by a large number of tests on charge current of $SF_6$ gas-insulated disconnecting switches, the withstand voltage against grounding of $SF_6$ gas-insulated disconnecting switches while opening or closing need not be determined greater than the insulation withstand voltage against the ground of gas-insulated lines.

As a result, it was recognised that, as shown in the embodiment of Figure 6, $l_1$, the shortest distance between the movable side electrode block 112 or the fixed electrode assembly 111 and the internal wall of the metal container 106, may be made equal to, or even smaller, than $l_2$, the distance between the internal wall of the metal container 115 of the gas-insulated line and the conductor terminal 117 which is coaxial with respect to the internal wall of the container 115.

The aforementioned has been described as to the case where the respective gas-insulated disconnecting switches in all the bays, such as bank bays, feeder bays, and bus coupler bays, of the gas-insulated switching apparatus that constitutes a substation of duplicated-bus system are arranged such that the respective movable electrodes thereof are connected to the load sides. However, the present invention is not limited to this structure. Namely, in the case of a substation of single-bus system, a bus coupler bay is not provided. Further, in the case of either single-bus, or duplicated-bus system, a gas-insulated switching apparatus for use in section is sometimes installed at the mid-portion of the bus. This section-use gas-insulated switching apparatus comprises gas-insulated disconnecting switches connected respectively to both sides of the interrupter. In this case, the terminals of the disconnecting switches to be connected to the terminals of the interrupter shall be regarded as movable electrode sides of the disconnecting switches.

As described above, according to the present invention, there may be provided an economical gas-insulated switching apparatus in which the movable electrode side terminals of disconnecting switches are connected to the load sides, thereby causing the apparatus to be less susceptible to occurrence of ground flash-over failure from the inter-electrode of the disconnecting switches caused by restrikes when the disconnecting switches are opened or closed, and also permitting the diameter of the metal container of the disconnecting switches to be reduced.

## Claims

1. Switching apparatus comprising
a first gas-insulated bus (31) and a second gas-insulated bus (32);
a bank bay (a) in which a pair of disconnecting switches (2, 3) are connected to respective buses (32, 31) and to one side of an interrupter (21) and the other side of the interrupter (21) is connected to a further disconnecting switch (1);
a feeder bay (b) in which a pair of disconnecting switches (4, 5) are connected to respective buses (32, 31) and to one side of an interrupter (22) and the other side of the interrupter (22) is connected to a further disconnecting switch (6);
a bus coupler bay (c) in which a pair of disconnecting switches (16, 17) are connected to respective buses (32, 31) and to opposite sides of an interrupter (26);
each disconnecting switch having a grounded metal container (106) containing an insulating gas, a fixed electrode assembly (111) comprising a fixed electrode and a shield, and a movable electrode assembly (112) comprising a shield and an electrode movable into contact with the fixed electrode when closed and positioned within its shield when open;
characterised in that all the disconnecting switches have their movable electrode connected to the respective interrupter.

2. Switching apparatus according to claim 1, characterised in that the terminals (117) of said movable electrode and the electrode-constituting member (101) of said fixed electrode of each gas-insulated disconnecting switch are arranged in a straight line.

3. Switching apparatus according to claim 1, characterised in that the connections between the gas-insulated disconnecting switches and the gas-insulated interrupters are gas-insulated lines constituted by conductors coaxially arranged within grounded metal containers containing insulating gas and the distance between either the shield of the movable electrode or the shield of the fixed electrode of the gas-insulated disconnecting switch and the internal wall of the grounded metal container thereof is equal to or less than the distance between the conductor of the gas-insulated line and the internal wall of the metal container of the gas-insulated line.

4. Switching apparatus as claimed in any preceding claim comprising first and second gas-insulated buses, at least one bank bay comprising a gas-insulated interrupter connected by way of a gas-insulated disconnecting switch to a bushing and by way of respective gas-insulated disconnecting switches to said gas-insulated buses; at least one feeder bay comprising a gas-insulated interrupter connected by way of respective gas-insulated disconnecting switches to said gas-insulated buses, and by way of a gas-insulated disconnecting switch to a bushing; and at least one bus coupler bay comprising a gas-insulated disconnecting switch connected by way of respective gas-insulated disconnecting switches to said gas-insulated buses.

## Patentansprüche

1. Schaltgerät mit
einer ersten gasisolierten Sammelleitung (31) und einer zweiten Sammelleitung (32);
einem Anschlußfeld (a), bei dem ein Paar von Trennschaltern (2, 3) an die jeweiligen Sammelleitungen (32, 31) und an eine Seite eines Unterbrechers (21) angeschlossen ist und die andere Seite des Unterbrechers (21) mit einem weiteren Trennschalter (1) verbunden ist;
einem Zuleitungsfeld (b), in dem ein Paar Trennschalter (4, 5) an die jeweilige Sammelleitung (32, 31) und an eine Seite eines Unterbrechers (32) angeschlossen ist und die andere Seite des Unterbrechers (22) mit einem weiteren Trennschalter (6) verbunden ist;

einem Sammelleitungs-Kopplungsfeld (c), in dem ein Paar von Trennschaltern (16, 17) an die jeweilige Sammelleitung (32, 31) und an entgegengesetzte Seiten eines Untebrechers (26) angeschlossen ist;

wobei jeder Trennschalter ein geerdetes Metallgehäuse (106) bestizt, das ein Isoliergas enthält, mit einer feststehenden Elektrodenanordnung (111) mit einer festen Elektrode und einem Schirm, und mit einer bewegbaren Elektrodenanordnung (112) mit einem Schirm und einer Elektrode, die in Kontakt mit der feststehenden Elektrode bewegt werden kann, wenn sie geschlossen ist, und die sich im offenen Zustand in ihrem Schirm befindet;

dadurch gekennzeichnet, daß alle Trennschalter mit ihren bewegbaren Elektroden an die jeweiligen Unterbrecher angeschlossen sind.

2. Schaltgerät nach Anspruch 1, dadurch gekennzeichnet, daß die Anschlüsse (117) der bewegbaren Elektrode und das elektrodenbildende Teil (101) der feststehenden Elektrode jedes gasisolierten Trennschalters in einer geraden Linie angeordnet sind.

3. Schaltgerät nach Anspruch 1, dadurch gekennzeichnet, daß die Verbindungen zwischen den gasisolierten Trennschaltern und den gasisolierten Unterbrechern gasisolierte Leitungen sind, die von koaxial in den geerdeten Metallbehältern, die das Isoliergas enthalten, angeordneten Leitern gebildet sind und daß der Abstand zwischen dem Schirm der bewegbaren Elektrode oder dem Schirm der feststehenden Elektrode des gasisolierten Trennschalters und der Innenwand des geerdeten Metallgehäuses gleich oder kleiner als der Abstand zwischen dem Leiter der gasisolierten Leitung und der Innenwand des Metallbehälters der gasisolierten Leitung ist.

4. Schaltgerät nach einem der vorhergehenden Ansprüche, mit ersten und zweiten gasisolierten Sammelleitungen, mit mindestens einem Anschlußfeld mit einem gasisolierten Unterbrecher, der durch einen gasisolierten Trennschalter mit einer Buchse und durch jeweilige gasisolierte Trennschalter mit den gasisolierten Sammelleitungen verbunden ist; mit mindestens einem Zuleitungsfeld, das einen gasisolierten Unterbrecher aufweist, der durch jeweils gasisolierte Trennschalter mit den gasisolierten Sammelleitungen und durch einen gasisolierten Trennschalter mit einer Buchse verbunden ist; und mit mindestens einem Sammelleitungs-Kopplungsfeld, das einen gasisolierten Trennschalter aufweist, der über jeweils gasisolierte Trennschalter mit den gasisolierten Sammelleitungen verbunden ist.

## Revendications

1. Appareil de commutation qui comprend:

une première ligne ou un premier bus (31) isolé par un gaz et une seconde ligne ou un second bus (32) isolé par un gaz;

Une baie de groupes (a) dans lequel deux appareils de coupure ou de déconnexion (2, 3) sont connectés aux bus correspondants (32, 31) et à l'un des côtés d'un interrupteur (21) dont l'autre côté est connecté à un autre appareil de coupure ou de déconnexion (1);

une baie de feeder (b) dans laquelle deux appareils de coupure ou de déconnexion (4, 5) sont connectés aux bus correspondants (32, 31) et à l'un des côtés d'un interrupteur (22) dont l'autre côté est connecté à un autre appareil de coupure ou de déconnexion (6);

une baie de coupleur de bus ou de lignes (c) dans laquelle deux appareils de coupure ou de déconnexion (16, 17) sont connectés aux bus correspondants (32, 31) et aux côtés opposés d'un interrupteur (26);

chaque appareil de coupure ou de déconnexion possédant un contenur ou un boîtier en métal mis à la terre ou à la masse (106) contenant un gaz isolant, une électrode fixe (111) comportant un écran ou un blindage, et une électrode mobile au contact de l'électrode fixe quand l'appareil est fermé et qui est placée dans son écran ou son blindage quand il est ouvert;

caractérisé en ce que l'électrode mobile de tous les appareils de coupure ou de déconnexion est connectée à l'interrupteur correspondant.

2. Appareil de commutation selon la revendication 1, caractérisé en ce que les bornes (117) de l'électrode mobile et l'organe constitutif (101) de l'électrode fixe de chaque appareil de coupure isolé par un gaz sont disposés en ligne droite.

3. Appareil de commutation selon la revendication 1, caractérisé en ce que les connexions entre les appareils de coupure ou de déconnexion isolés par un gaz et les interrupteurs isolés par un gaz sont des lignes isolées par un gaz constituées par des conducteurs montés coaxialement dans les conteneurs ou les boîtiers métalliques contenant le gaz isolant, et en ce que la distance entre soit le blindage ou l'écran de l'électrode mobile ou celui de l'électrode fixe de l'appareil de coupure ou de déconnexion isolé par un gaz et la paroi intérieure de son conteneur ou son boîtier métallique est égale ou inférieure à la distance entre le conducteur de la ligne isolée par un gaz et la paroi intérieure du conteneur ou du boîtier métallique de la ligne isolée par un gaz.

4. Appareil de commutation selon l'une quelconque des revendications précédentes, caractérisé en ce qu'il comprend des premiers et des seconds bus isolés par un gaz, au moins un groupe comprenant un interrupteur isolé par un gaz connecté, au moyen d'un appareil de coupure ou de déconnexion isolé par un gaz, à une borne et au moyen d'un appareil de coupure ou de déconnexion correspondant isolé par un gaz, audit bus isolé par un gaz; au moins, une baie de feeder comprenant les appareils de coupure ou de déconnexion correspondants aboutissant auxdits bus isolés par un gaz, et au moyen d'un appareil de coupure ou de déconnexion isolé par un gaz à une borne; et, au moins, une baie de coupleur de bus ou de ligne comprenant un appareil de coupure ou de déconnexion isolé par un gaz connecté au moyen d'un appareil de coupure ou de déconnexion correspondant auxdits bus isolés par un gaz.

FIG.1.

FIG.2.

1

*Fig. 3.*

**EP 0 122 728 B1**

FIG.4.

3

| | |
|---|---|
| CASE 1<br>THE VOLTAGES OF THE ELECTRODES<br>IMMEDIATLY BEFORE A RESTRIKE | CASE 2<br>THE VOLTAGES OF THE ELECTRODES<br>IMMEDIATLY BEFORE A RESTRIKE |
| FIXED<br>ELECTRODE<br><br>NEGATIVE  ⬜  MOVABLE<br>ELECTRODE<br><br>POSITIVE | FIXED<br>ELECTRODE<br><br>POSITIVE  ⬜  MOVABLE<br>ELECTRODE<br><br>NEGATIVE |
| THE POLARITY OF SURGE<br>VOLTAGE : NEGATIVE | THE POLARITY OF SURGE<br>VOLTAGE : POSITIVE |
| CASE 3<br>THE VOLTAGES OF THE ELECTRODES<br>IMMEDIATLY BEFORE A RESTRIKE | CASE 4<br>THE VOLTAGES OF THE ELECTRODES<br>IMMEDIATLY BEFORE A RESTRIKE |
| MOVABLE<br>ELECTRODE  ⬜<br><br>NEGATIVE  FIXED<br>ELECTRODE<br><br>POSITIVE | MOVABLE<br>ELECTRODE  ⬜<br><br>POSITIVE  FIXED<br>ELECTRODE<br><br>NEGATIVE |
| THE POLARITY OF SURGE<br>VOLTAGE : NEGATIVE | THE POLARITY OF SURGE<br>VOLTAGE : POSITIVE |

## FIG.5.

Fig.6.

EP 0 122 728 B1

Fig.7.